# EUROPÄISCHE PATENTSCHRIFT

(11) **EP 1 063 478 B1**
(45) Veröffentlichungstag und Bekanntmachung des Hinweises auf die Patenterteilung: **22.10.2003**
(21) Anmeldenummer: 99115893.2
(22) Anmeldetag: 12.08.1999
(51) Int. Cl.: F24D 3/16, F24D 3/14

(54) **Fussboden- und/oder Wand- und/oder Deckenheizung aus Heizungselementen sowie derartige Heizungselemente**
Underfloor and/or wall and/or ceiling heating with heating elements, and such heating elements
Chauffage par le sol et/ou par le mur et/ou par le plafond avec élements de chauffage, et élements de chauffage

(30) Priorität: 26.06.1999 DE 19929338; 08.07.1999 DE 19931759
(43) Veröffentlichungstag der Anmeldung: 27.12.2000
(73) Patentinhaber: Kaufmann Keramik GmbH, 95111 Rehau (DE)
(72) Erfinder: Brecht, Wido E., 75137 Karlsruhe (DE); Hock, Dietmar, 74862 Binau (DE)
(74) Vertreter: Hübner, Gerd, Dipl.-Phys.

(56) Entgegenhaltungen:
- EP-A- 0 111 763
- DE-A- 3 208 278
- DE-A- 3 215 902
- DE-U- 9 314 110
- DE-U- 29 700 639
- DE-U- 29 801 344
- FR-A- 2 435 880

## Beschreibung

### Technisches Gebiet:

Die Erfindung betrifft eine Fußboden- und/oder Wand- und/oder Deckenheizung, bestehend aus einzelnen Heizungselementen in Form von plattenförmigen Quadern, die parallel zueinander verlaufende Aussparungen aufweisen, die in sich gegenüberliegende Stirnflächen des Quaders münden und die Enden der Aussparungen zweier benachbarter Quader, die mit ihren Stirnflächen aneinanderstoßen, sich decken; wobei in die Aussparungen wenigstens eine ein Heiz- oder Kühlmedium führende Leitung verlegt und über eine Mehrzahl derartiger Heizungselemente geführt ist, gemäß dem Oberbegriff des Anspruchs 1 sowie ein derartiges Heizungselement gemäß dem Oberbegriff des Anspruchs 7.

### Stand der Technik:

Es sind Fußboden- und Wandheizungen bekannt, welche in ihrem Aufbau aus nach unten zum Boden hin verlegten Isolationselementen aus einem Polystyrol- oder einem Polyurethan-Schaumstoff in Form von Platten bestehen, auf die ein Heizwärme zuführendes Medium aufgelegt oder eingebettet ist. Das Heizwärme zuführende Medium kann entweder ein Schlauchsystem aus Plastikschläuchen oder ein System von metallischen Leitungen zur Zuführung von Wasser sein oder es kann auch eine elektrische Leitung Verwendung finden. Das Heizwärme zuführende Medium wird gewöhnlich mit einer Schicht Estrich von einigen Zentimetern Dicke überdeckt. Auf diesen Aufbau kann dann der oberste Bodenbelag in Form von Kacheln aufgebracht werden, die mittels Mörtel oder einem Kunststoffkleber auf den Estrich aufgebracht werden.

Der grundlegende Nachteil sämtlicher derartiger Systeme besteht darin, dass diese eine relativ große Wärmeträgheit besitzen und auch eine mehr oder weniger große Vorlauftemperatur erfordern, falls Wasser als Heizmedium verwendet wird. Die relativ große Wärmeträgheit bedingt eine große Regelträgheit und rührt daher, dass das die Heizwärme zuführende Medium in einer Bodentiefe von wenigstens zirka 3 bis 6 cm innerhalb des Bodens angeordnet ist und der gesamte Estrich erwärmt werden muß, der eine große Wärmekapazität besitzt. Bei Wandheizungen mögen die Verhältnisse bezüglich der Wärmeträgheit etwas besser sein, jedoch erfordert hier ein Wand-Heizungsaufbau mit guter Isolation zur Wand einen relativ dicken Systemaufbau. Das bedeutet, dass die Wärme nicht direkt dort in das System eingespeist wird, wo sie benötigt wird, nämlich an der Oberfläche des Bodens oder der Wand, um das Heizmedium mit geringer Vorlauftemperatur fahren zu können.

Des Weiteren sind Wärmestrahlung abgebende Bausteine zum Aufbau von beheizten Wänden oder Decken oder Böden bekannt, die zum Erstellen eines allseits umschlossenen Raumes (Tepidarium) dienen, der eine homogene Strahlungsklimatisierung aufweist. Durch die DE 41 26 430 A1 ist hierzu ein quaderförmiger Ziegel bekannt geworden, der längs einer Achse durchgehende, luftführende Löcher aufweist, die in die Stirnflächen bzw. von der Achse durchstoßenden Seitenflächen der Ziegel münden. Zur Ausbildung von flächigen Fertigelementen werden eine Mehrzahl von Ziegeln an ihren Seitenflächen zusammengeklebt und an den Endbereichen entsprechend der künftigen Funktion als Wand- oder Decken- oder Bodenteil auf Maß und Form geschnitten. Mehrere Fertigelemente werden an den geschnittenen Flächen dergestalt zusammengefügt, dass die luftführenden Löcher paßgenau sich decken und somit zusammenhängende Luftkanäle bilden, die mit erwärmter Luft beaufschlagt werden können. Die Ziegel können dabei Tonziegel sein ebenso wie die Fertigelemente auf ihrer Rückseite bzw. nach außen mit einer Isolierung versehen sein können. Auch ist dort vorgeschlagen worden, in die Kanäle der Langlöcher der Fertigelemente wasserdichte Schläuche einzuführen, in die Heizwasser zum Aufheizen der Fertigelemente eingespeist werden kann.

Die DE 32 15 902 offenbart eine Heizfläche für eine Fußbodenheizung, deren tragendes Teil eine Profilplatte aus Metall, Kunststoff oder dergleichen ist. Aus einer Grundplatte stehen von einer Seite Aufnahmen für Heizrohre und Stützen vor. Nach dem Montieren der Heizrohre in den Aufnahmen werden diese durch Abdeckplatten verschlossen.

Die DE 93 14 110 U1 zeigt einen plattenförmigen Wärmetauscher, der in Häusern und Wohnräumen als Matte oder Platte modular verlegbar ist. Basis dieses Wärmetauschers ist ein quaderförmiger weicher Dämmstoffblock, der an seiner Obenseite Nuten zur Aufnahme von Heizrohren aufweist. Diese sind dort relativ locker eingelegt und durch einen Schlemmstoff fixiert.

Bei beiden Systemen nach dem Stand der Technik ist der Wärmeübergang zwischen Heizungsrohren und den um diesen liegenden Zonen nicht optimal, da Spalte konstruktionsbedingt vorhanden sind oder sich bilden können. Darüber hinaus sind die Heizungselemente nach dem Stand der Technik nicht für eine Boden- und Wandmontage gleichermaßen geeignet.

### Technische Aufgabe:

Der Erfindung liegt die Aufgabe zugrunde, eine Fußboden- und/oder Wandheizung und ein Heizungselement hierfür zu schaffen, welches eine geringere Wärmeträgheit als vergleichbare Systeme des Standes der Technik aufweist, die Heizung geringe Wärmeverluste aufweisen soll und insbesondere mit geringer Vorlauftemperatur des Heizmediums gefahren werden soll, wobei das System auch zur Kühlung geeignet sein soll.

Diese Aufgabe wird durch die im kennzeichnungsteil der Ansprüche 1 bzw. 8 angegebenen Merkmale gelöst.

### Offenbarung der Erfindung und deren Vorteile:

Die Lösung der Aufgabe besteht unter anderem darin, dass die Aussparungen von einer der Hauptoberflächen des Quaders ausgehende, zu dieser Hauptoberfläche hin offene Längsnuten sind, deren Tiefe geringfügig größer bis höchstens gleich dem Durchmesser der Leitung ist, die in den Längsnuten längs formschlüssig-luftdicht angeordnet ist, und somit die Leitungen der Hauptoberfläche benachbart sind, wobei die zwischen Oberseite der Leitungen innerhalb der Längsnuten und der Hauptoberfläche des Quaders gebildete Restfuge mittels eines Füllmaterials luftdicht verfugt ist. Als Leitungen können entweder flexible Schläuche für das Heizmedium Wasser oder elektrische Leitungen für das Heizmedium elektrische Energie jeweils mit kreisrundem Querschnitt eingesetzt werden.

Nach dem Einlegen der Leitungen in die Längsnuten verbleibt eine geringe Restfuge, die mit einem Füllmaterial verfüllt wird, welches entweder ein Mörtel oder Kleber oder keramischer Spachtelkleber ist, welcher gegebenenfalls mit Ton und/oder Glasschleifschlamm vermischt ist. Auf diese Weise sind die Leitungen gegen Beschädigungen ausreichend geschützt. Im Falle von Wandheizungen brauchen die Heizelemente nur glatt gespachtelt zu werden und können anschließend gestrichen oder auch tapeziert werden, weshalb sich die erfindungsgemäße Heizung in besonderer Weise zum Aufbau von beheizten Trennwänden oder Raumtrennern eignet.

Wesentlich ist die Erzielung eines luftdichten Formschlusses der flexiblen Schläuche innerhalb der Längsnuten, weshalb die lichte Weite derselben längs der Einmündung in die Hauptoberfläche kleiner ist als der Durchmesser der Leitungzung Einsetzen in die Längsnut.

Der entscheidende Vorteil der erfindungsgemäßen Fußboden- und/oder Wand und/oder Deckenheizung sowie des zum Aufbau verwendeten Heizungselements besteht darin, dass sie eine geringere Wärmeträgheit und geringe Wärmeverluste aufweist. Das rührt daher, weil die das Heizmedium führenden Leitungen unmittelbar unterhalb des obersten Bodenbelages in den Heizungselementen verlegt sind und deshalb die Wärme dort erzeugt wird, wo sie gebraucht wird, nämlich in unmittelbarer Nachbarschaft des obersten Boden- oder Wandbelages. Aus diesem Grund kann die erfindungsgemäße Heizung auch mit einer geringeren Vorlauftemperatur des Heizmediums als beim Stand der Technik gefahren werden, nämlich im Bereich zwischen 22 bis 30 Grad C, ohne dass Einbußen in der subjektiven Behaglichkeit eintreten, weil die Heizung einen hohen Anteil an Strahlungswärme besitzt.

Vorteilhaft weist der Quader auch in seiner den Längsnuten gegenüberliegenden Hauptoberfläche Aussparungen auf, in denen wärmeisolierende Isolierkörper angeordnet sind; oder die Aussparungen können auch zur Leitung von Warmluft oder zur Luftisolation dienen. Mittels der Isolierung, insbesondere einer solchen aus einem wärmeisolierenden Isolierkörper, ist das Heizungselement nach unten zum Tragboden oder zur Wand hin isoliert. Auf der die Längsnuten und die Leitungen aufweisenden Hauptoberfläche des Quaders werden anschließend Fliesen oder Kacheln oder Holz oder ein sonstiger Bodenbelag aufgebracht.

Ein Heizungselement zum Aufbau einer Fußboden- und/oder Wand- und/oder Deckenheizung, bestehend aus einem plattenförmigen, massiven Quader, der parallel zueinander verlaufende Aussparungen aufweist, die in sich gegenüberliegende Stirnflächen des Quaders münden und die Enden der Aussparungen zweier benachbarter Quader, die mit ihren Stirnflächen aneinanderstoßen, sich decken, wobei in die Aussparungen wenigstens eine ein Heizmedium führende Leitung verlegbar ist, ist unter anderem dadurch charakterisiert, dass die Aussparungen von einer der Hauptoberflächen des Quaders ausgehende, zu dieser Hauptoberfläche hin offene Längsnuten sind, deren Tiefe geringfügig größer bis höchstens gleich dem Durchmesser der in den Längsnuten zu verlegenden Leitung ist und deren lichte Weite kleiner als der Leitungsdurchmesser ist. Der Quader kann auch in seiner den Längsnuten gegenüberliegenden Hauptoberfläche wenigstens eine flächige Aussparung in Form eines Längskanals aufweisen, der bzw. die wenigstens von zwei längs verlaufenden Randstegen begrenzt ist und in der ein wärmeisolierender Isolierkörper anordbar ist oder angeordnet sein kann oder der bzw. die zur Luftführung dienen. Die Randstege sowie der oder die Mittelstege bilden die Laststempel, mit denen das Heizungselement auf dem Untergrund ruht.

Ein derartiges Heizungselement besteht aus Keramik, Steinzeug, Steingut oder Ton. Bei der Verwendung von keramischen Materialien bestehen diese aus einer Mischung von Ton und Schamotte sowie Kaolin.

Dient der Quader zur Verwendung als Bodenelement, so weist er vorzugsweise zwei oder mehr Aussparungen auf, die durch wenigstens einen Mittelsteg unterteilt und an den Seitenkanten von je einem längs verlaufenden Randsteg begrenzt sind, wobei in der Projektion der oberen, die Längsnuten aufweisenden Hauptoberfläche auf die untere, die Aussparungen aufweisende Hauptoberfläche jeweils oberhalb eines Mittelsteges eine Längsnut verläuft.

Zur besseren Halterung der Wärmeisolierungen können die Aussparungen einen schwalbenschwanzförmigen oder trapezförmigen bzw. hinterschnittenen Querschnitt aufweisen. Ebenso kann das Heizungselement auf seinen zwei seitlichen, sich gegenüberliegenden Längsflächen je eine Längsnut und eine Feder zur Nut-und-Federverlegung zweier benachbarter Heizungselemente aufweisen. Vorteilhaft ist jeweils auch an einer der Längsseitenwände des Heizungselements eine Nut bzw. an einer der Querseitenwände eine Feder angeordnet.

Bei der Verwendung des Heizungselements als Wandelement weist dieses nur eine einzige, von je einem längs der parallelen schmalen Längsseiten verlaufenden Randsteg begrenzte Aussparung auf, jedoch sind dann vorzugsweise auf der gegenüberliegenden Hauptoberfläche zwischen vier bis sechs Längsnuten angeordnet. Ebenso ist das Heizungs-Wandelement als rechtwinkliges oder schiefwinkliges Eckelement oder gekrümmt ausgebildet.

Ein Heizungselement weist bevorzugt ungefähr eine Länge zwischen 50 bis 100 cm, eine Breite von 25 - 50 cm und eine Dicke von 5 bis 8 cm auf, wobei die Tiefe der Nuten zwischen 12 bis 22 mm beträgt. Diese geringe Dicke von 5 bis 8 cm besitzt den Vorteil, dass damit ein geringer seitlicher Aufbau gewährleistet ist; insbesondere bei der Verwendung als Wandheizung, so dass die Wärmeschutzverordnung mit der Erfindung leicht eingehalten wird. Ebenso eignet sich das erfindungsgemäße Heizungselement in ganz besonderer Weise dazu, dass es in eine Solarheizung integriert werden kann, weil das Heizungselement und damit aufgebaute Fußboden- oder Wandheizungen im Niedrigst-Temperaturbereich effektiv zu arbeiten imstande ist, nämlich bei Vorlauftemperaturen zwischen 25 bis 40 Grad Celsius.

Des Weiteren eignet sich das erfindungsgemäße Heizelement auch hervorragend zur Kühlung, weil durch die Leitungen auch ein Kühlmedium transportiert werden kann.

Die Fußbodenheizung besitzt des Weiteren den Vorteil, dass die Heizelemente mit ihren auf der Unterseite integrierten Isolierkörpern zum einen eine Wärmeisolierung aber auch eine Trittschalldämmung bewirken.

Kurzbezeichnung der Zeichnung, in der zeigen:
- Figur 1: eine perspektivische Darstellung eines Heizungselementes mit in die Längsnuten eingelegten Leitungen für-das Heizmedium sowie mit unterseitiger Isolierung,
- Figur 2: einen Querschnitt durch das Heizungselement der Figur 1,
- Figur 3: einen vergrößerten Querschnitt durch ein Heizungselement im Bereich einer Längsnut für eine elastische Leitung,
- Figur 4: ein halbes Endteil für die mäanderförmige Rückführung der Leitungen in benachbarten Heizungselementen,
- Figur 5: ein Wandeck-Heizungselement in perspektivischer Darstellung,
- Figur 6: ein flächiges Wandelement,
- Figur 7: ein gekrümmtes, flächiges Wandelement und
- Figur 8: eine weitere Ausführungsform eines Heizungselementes in perspektivischer Darstellung mit unterseitigen Längsnuten und Quernuten zur Belüftung.

### Wege zur Ausführung der Erfindung:

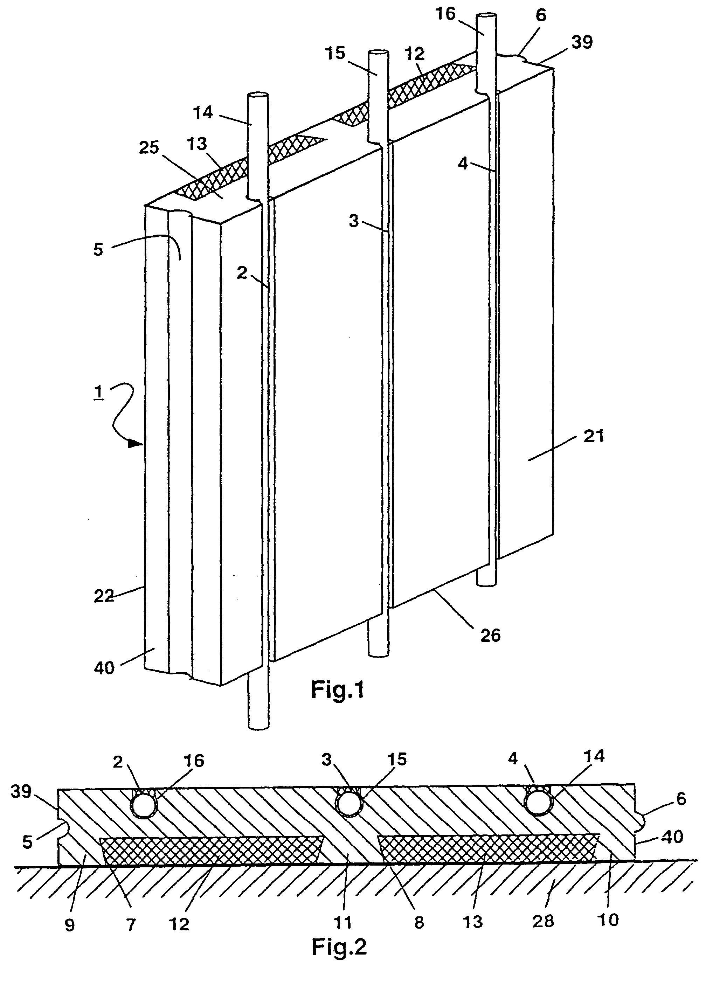

Figur 1 zeigt in perspektivischer Darstellung ein Heizungselement 1 zum Aufbau einer Fußbodenheizung, bestehend aus einem platten- und rechteckförmigen, massiven Quader 1, der aus keramischen Material besteht. Von der einen, nach oben zum Raum hin gewandten Hauptoberfläche 21 des Heizungselements 1 ausgehend besitzt dasselbe längs zueinander, vorzugsweise parallel und in äquidistanten Abständen voneinander, verlaufende Nuten 2, 3, 4, die längs zur Hauptoberfläche 22 hin offen sind. In die Nuten 2, 3, 4 sind Leitungen 14, 15, 16 formschlüssig-luftdicht eingelegt, wobei die Tiefe s der Nuten geringfügig größer bis höchstens gleich dem Durchmesser d der Leitung ist. Somit verlaufen die Leitungen direkt benachbart oder nur wenige Millimeter unterhalb der Hauptoberfläche 21.

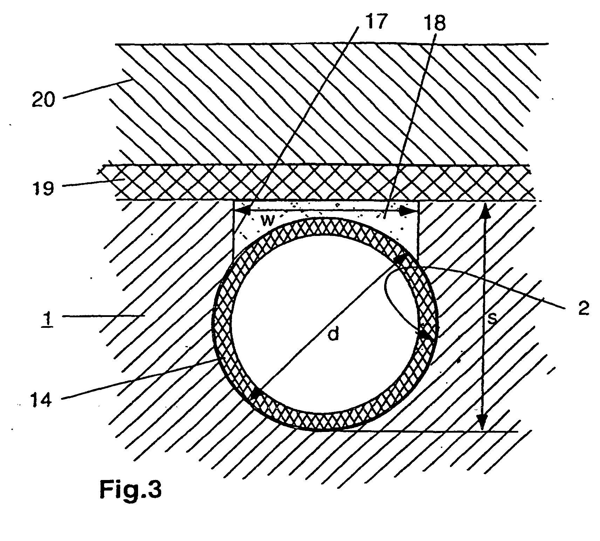

Der Querschnitt der Nuten (Fig. 3) ist entsprechend demjenigen der Leitungen geformt und in der Regel teilkreisförmig. Bei der Verwendung von flexiblen Kunststoffleitungen ist die lichte Weite w im oberen Bereich der Längsnuten direkt unterhalb der Hauptoberfläche 21 und längs derselben geringer als der Durchmesser d der Leitungen, so dass die Nuten sich zur Hauptoberfläche hin verjüngen und somit im Querschnitt gesehen eine Hinterschneidung aufweisen, w < d. Dadurch liegen die Leitungen nach ihrem Einpressen in die Nuten; was unter elastischer Verformung der Leitungen erfolgt, formschlüssig-luftdicht in den Nuten.

Zwischen der Oberseite der Leitungen 14, 15, 16, 27 innerhalb der Längsnuten 2, 3, 4, 23 und der Hauptoberfläche 21 des Quaders 1 ist eine längs verlaufende Restfuge 17, 24 ausgebildet, die mittels eines Füllmaterials 18, wie Mörtel bzw. Kleber oder keramischer Spachtelkleber, welcher gegebenenfalls mit Ton und/oder Glasschleifschlamm vermischt ist, luftdicht verfugt ist, so dass die Hauptoberfläche 21 glatt und luftdicht geschlossen ist.

Der Quader 1 weist auch in seiner den Längsnuten 2, 3, 4 gegenüberliegenden Hauptoberfläche 22 Aussparungen 7, 8 auf, welche durchgehend in die beiden Stirnflächen 25, 26 des Quaders 1 münden und welche durch zwei längs verlaufende Randstege 9, 10 und einen Mittelsteg 11 begrenzt werden, die sich in gleicher Richtung wie die Längsnuten erstrecken. Die Aussparungen 7, 8 können einen schwalbenschwanzförmigen Querschnitt aufweisen. In den Aussparungen 7, 8 sind wärmeisolierende Isolierkörper 12, 13 angeordnet, welche eine Wärmeisolierung nach unten zum Tragboden 28 bilden. Die Randstege 9, 10 und der Mittelsteg 11 dienen zur Abstützung des Heizelementes auf dem Tragboden 28. Auf die die Leitungen aufweisende Hauptoberfläche 21 des Quaders 1 werden anschließend Fliesen 20 oder Kacheln oder Holz oder ein sonstiger Bodenbelag aufgebracht.

Die Längskanäle können auch zur Führung von Warmluft oder zur Luftisolation dienen.

Des Weiteren weist das Heizungselement in seinen zwei seitlichen, sich gegenüberliegenden Längsflächen 39, 40 je eine Längsnut 5 und eine Feder 6 zur Nut-und-Federverlegung zweier benachbarter Heizungselemente auf.

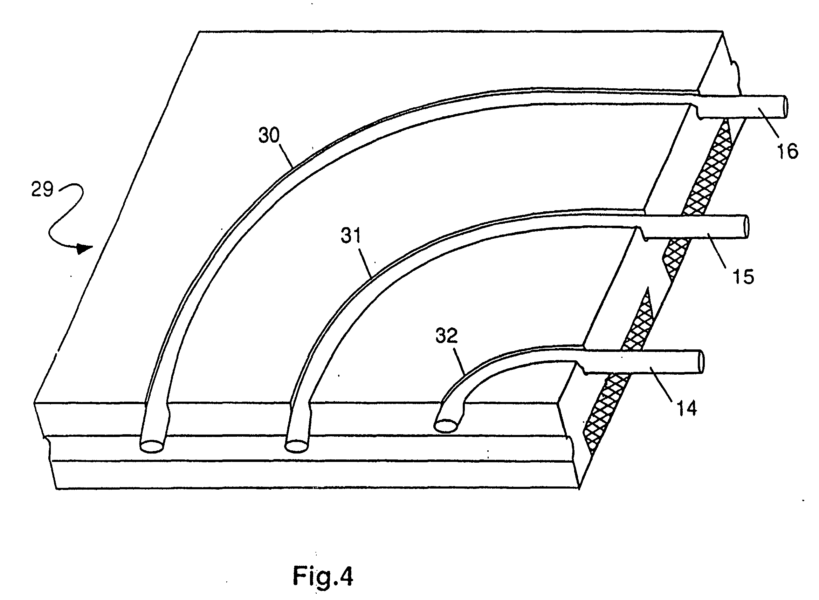

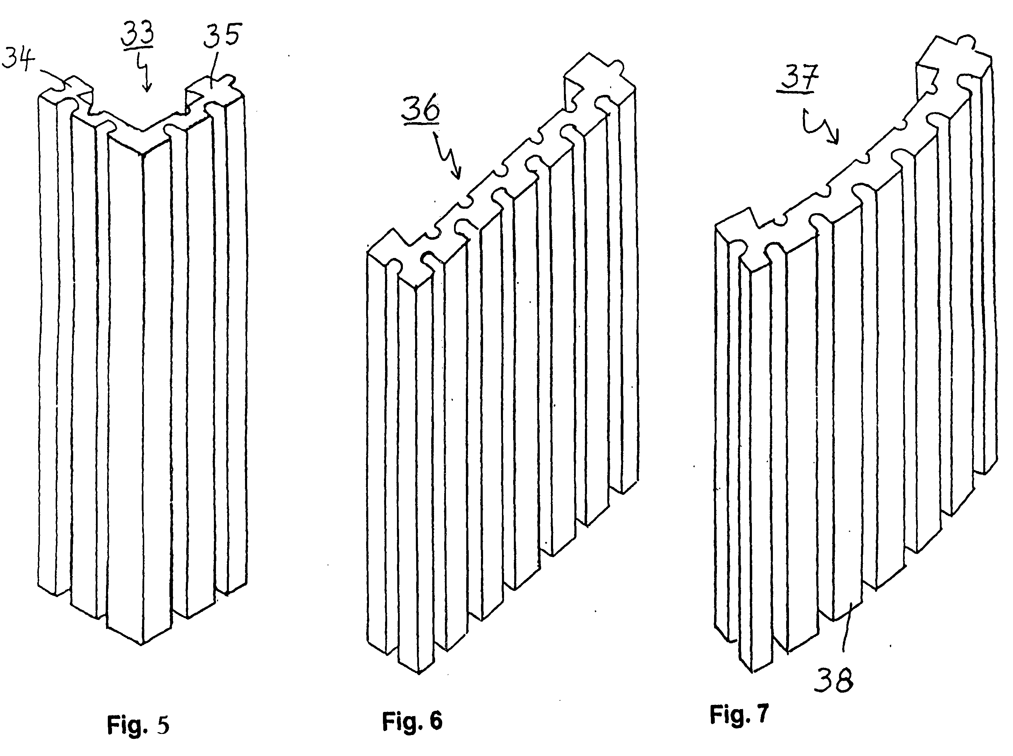

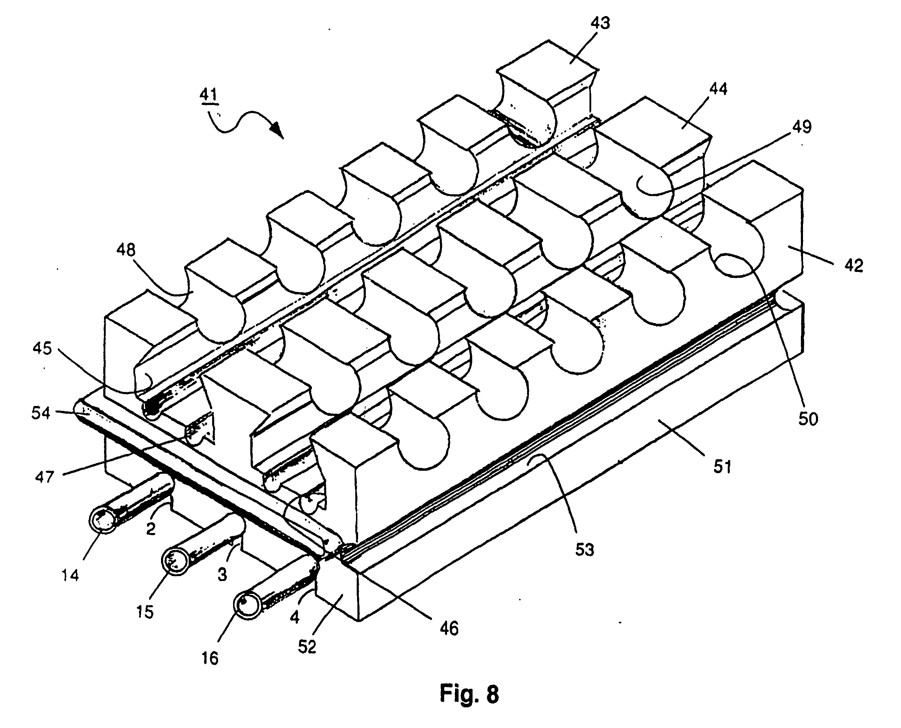

Figur 4 zeigt ein halbes Endteil 29 eines Heizungselementes, welches an Heizungselemente 1 angedockt wird, mit gekrümmten Längsnuten 30, 31, 32 für die mäanderförmige Rückführung der Leitungen in benachbarte Heizungselemente. Figur 5 zeigt ein Eck-Heizungselement 33 mit zwei rechtwinklig zueinander geformten Längsschenkeln 35, 35, in denen sich, wie vorstehend beschrieben, von den in den Raum weisenden Hauptoberflächen ausgehend, Längsnuten und, von in den zur Wand weisenden Hauptoberflächen ausgehend, Aussparungen befinden. Die Schenkel können auch schiefwinklig zueinander stehen. Die Figuren 6 und 7 zeigen zwei Wand-Heizungselemente 36, 37, bei denen in der wandseitigen Hauptoberfläche nur eine durchgehende Aussparung ohne Mittelsteg angeordnet ist. Bevorzugt sind bei dieser Ausgestaltung innerhalb der raumseitigen Häuptoberfläche zwischen vier bis sechs Längsnuten angeordnet. Diese Heizungselemente 33, 36, 37 können auch an die Wand geschraubt werden. Zusätzlich ist in Figur 8 ein Wand-Heizungselement gezeigt, dessen Plattenkörper 38 konvex gekrümmt ist

Bevorzugt besitzt ein Heizungselement ungefähr eine Länge zwischen 50 bis 100 cm, eine Breite von 25 - 50 cm und eine Dicke von 5 bis 7 cm, wobei die Tiefe s der Nuten zwischen 12 bis 22 mm beträgt.

Zur Herstellung eines Heizungselementes zum Aufbau einer Fußbodenund/oder Wand- und/oder Deckenheizung, bestehend aus einem plattenförmigen Quader aus Keramik, Steinzeug, Steingut oder Ton wird das formplastische, preßbare Ausgangsmaterial Ton für Keramik, Steinzeug, oder Steingut aus einer Presse mittels einer Schablone endlos stranggepreßt, die den freien Querschnitt des Heizungselementes aufweist; der Strang wird fortlaufend in Stücke der Länge des künftigen Heizungselementes geschnitten, die getrocknet und anschließend gebrannt werden, vorzugsweise bei Temperaturen um die 980 Grad Celsius zur Erzielung eines dichten Scherben.

Figur 8 zeigt ein weiteres Heizungselement 41, in perspektivischer Darstellung von der Unterseite her gesehen, wobei dieses Heizungselement 41 ähnlich dem Heizungselement 1 der Figur 1 aufgebaut ist. In der nach dem Einbau oberen Oberfläche befinden sich die Längsnuten 2, 3, 4, in denen die Leitungen 14, 15, 16 zum Heizen oder Kühlen angeordnet sind.

Auf der unteren Hauptoberfläche besitzt das Heizungselement 41 längs verlaufende Randstege 42, 43, zwischen denen sich ein Mittelsteg 44 befindet, so dass zwischen diesen Randstegen 42, 43 sowie Mittelsteg 44 längs den Leitungen 14, 15, 16 verlaufende Längskanäle 45, 46 ausgebildet sind, die bevorzugt einen im Prinzip trapezförmigen Querschnitt besitzen, wie es der Figur 8 zu entnehmen ist. Am Boden der Längskanäle 45, 46 verlaufen Längsnuten 47, welche zum Dehnungsausgleich des Heizungselementes 41 dienen. Die Randstege 42, 43 sowie der Mittelsteg 44 bilden Laststempel,'mit denen die Heizungselemente 41 auf ihrer Tragfläche ruhen.

Die Randstege 42, 43 sowie der Mittelsteg 44, die die Laststempel bilden, weisen jeweils, vorzugsweise in äquidistanten Abständen angeordnete, Querkanäle 48, 49, 50 auf, wobei die Querkanäle der einzelnen Laststempel fluchten. Damit durchsetzen die Querkanäle 48, 49 und 50 in ihrer Fortsetzung die Längskanäle 45, 46, so dass die Querkanäle in die Längsseitenflächen des Heizungselements 41 einmünden. Auf diese Weise wird das Heizungselement 41 durch die Längskanäle 45, 46 sowohl längs, als auch durch die Querkanäle 48, 49, 50 quer belüftet.

Diese Längs- und Querbelüftung besitzt den Vorteil, dass dadurch eine ausgezeichnete Isolierung des Heizungselementes 41 gegenüber der Unterseite bzw. Tragfläche erreicht wird. Versuche haben gezeigt, dass mit einem derarigen Heizelement die neue Heizkostenverordnung in ihren vorgeschriebenen neuen einzuhaltenden Werten weit übertroffen wird. Des Weiteren weist auch dieses Heizungselement 41 in seiner einen Längsseitenwand 51 und vorzugsweise in einer Querseitenwand eine Längsnut 53 auf, ebenso wie auf der gegenüberliegenden Längsseitenwand und vorzugsweise in einer der Querseitenwände 52 eine Feder ausgebildet ist. Diese Nuten und Federn benachbarter Heizungselemente greifen ineinander ein, wodurch eine hohe Bodenstabilität sämtlicher Heizungselemente im Verbund untereinander erreicht wird.

### Gewerbliche Anwendbarkeit:

Das Heizungselement ist insbesondere zum Aufbau einer Fußbodenund/oder Wand- und/oder Deckenheizung gewerblich anwendbar ebenso wie es zum Aufbau und zur indirekten Beheizung von Kachelöfen, von Tepidarien und Lackieranlagen aufgrund des hohen Strahlungswärmeanteils bestens gewerblich einsetzbar ist.

### Liste der Bezugszeichen:

- 1.: Quader
- 2.: Längsnut
- 3.: Längsnut
- 4.: Längsnut
- 5.: Längsnut
- 6.: Feder
- 7.: flächige Aussparung
- 8.: flächige Aussparung
- 9.: Randsteg
- 10.: Randsteg
- 11.: Mittelsteg
- 12.: Isoliermaterial
- 13.: Isoliermaterial
- 14.: Leitung
- 15.: Leitung
- 16.: Leitung
- 17.: Restfuge
- 18.: Füllmaterial, wie Mörtel bzw. Kleber
- 19.: Fliesenkleber
- 20.: Fliese
- 21.: obere Hauptoberfläche
- 22.: untere Hauptoberfläche
- 23.: Längsnut
- 24.: Restfuge
- 25.: kleine Seiten- oder Stirnfläche
- 26.: kleine Seiten- oder Stirnfläche
- 27.: metallische Rohrleitung
- 28.: Tragboden
- 29.: Quader
- 30.: gekrümmte Längsnut
- 31.: gekrümmte Längsnut
- 32.: xgekrümmte Längsnut
- 33.: Eck-Heizungselement
- 34.: Längsschenkel
- 35.: Längsschenkel
- 36.: Wand-Heizungselement
- 37.: Wand-Heizungselement
- 38.: Plattenkörper
- 39.: Längsseitenfläche
- 40.: Längsseitenfläche
- 41.: Heizungselement
- 42.: Randsteg
- 43.: Randsteg
- 44.: Mittelsteg
- 45.: Längskanal
- 46.: Längskanal
- 47.: Längsnut
- 48.: Querkanal
- 49.: Querkanal
- 50.: Querkanal
- 51.: Längsseitenwand
- 52.: Querseitenwand
- 53.: Nut
- 54.: Feder

## Patentansprüche

1. Fußboden- und/oder Wand- und/oder Deckenheizung, bestehend aus einzelnen Heizungselementen in Form von plattenförmigen Quadern (1,29), die parallel zueinander verlaufende Aussparungen (2,3,4) aufweisen, die in sich gegenüberliegende Stirnflächen (25,26) des Quaders (1) münden und die Enden der Aussparungen (2,3,4) zweier benachbarter Quader (1), die mit ihren Stirnflächen (25,26) aneinanderstoßen, sich decken, wobei in die Aussparungen (2,3,4) wenigstens eine ein Heiz- oder Kühlmedium führende Leitung (14,15,16) verlegt und über eine Mehrzahl derartiger Heizungselemente geführt ist, wobei die Aussparungen von einer der Hauptoberflächen (21,22) des Quaders (1) ausgehende, zu dieser Hauptoberfläche (21,22) hin offene Längsnuten (2,3,4) sind, deren Tiefe (s) geringfügig größer bis höchstens gleich dem Durchmesser (d) der Leitung (14,15,16) ist, **dadurch gekennzeichnet**,
- **dass** die plattenförmigen Quader (1) aus Keramik, Steinzeug, Steingut oder Ton bestehen,
- **dass** die Leitungen (14,15,16) flexible kunststoffleitungen sind sowie in den Längsnuten (2,3,4) längs formschlüssig-luftdicht angeordnet und somit der Hauptoberfläche (21,22) benachbart sind, wobei die zwischen der Oberseite der Leitungen (14,15,16) innerhalb der Längsnuten (2,3,4) und der Hauptoberfläche (21,22) des Quaders (1) gebildete Restfuge (17,24) mittels eines Füllmaterials (18) luftdicht verfugt ist und
- **dass** innerhalb der Längsnuten (2,3,4) die lichte Weite (w) derselben längs der Einmündung in die Hauptoberfläche kleiner ist als der Durchmesser (d) der Leitung (14,15,16).

2. Fußboden- und/oder Wand- und/oder Deckenheizung nach Anspruch 1, **dadurch gekennzeichnet, dass** der Quader (1) auch in seiner den Längsnuten (2,3,4) gegenüberliegenden Hauptoberfläche (21,22) Aussparungen (7,8), vorzugsweise in Form von Längskanälen, aufweist, in denen wärmeisolierende Isolierkörper (12,13) angeordnet sind oder die Aussparungen bzw. Längskanäle zur Leitung von Warm- oder Kaltluft oder zur Luftisolation dienen.

3. Fußboden- und/oder Wand- und/oder Deckenheizung nach Anspruch 2, **dadurch gekennzeichnet, dass** die luftführenden Aussparungen (45,46), vorzugsweise in Form von Längskanälen (45,46), von luftführenden Querkanälen (48,49,50) durchsetzt sind.

4. Fußboden- und/oder Wand- und/oder Deckenheizung nach einem der Ansprüche 1 oder 2 oder 3,
**dadurch gekennzeichnet, dass** auf der die Längsnuten (2,3,4) und die Leitungen (14,15,16) aufweisenden Hauptoberfläche (21) des Quaders (1) Fliesen (20) oder Kacheln oder Holz oder ein sonstiger-Bodenbelag aufgebracht ist.

5. Fußboden- und/oder Wand- und/oder Deckenheizung nach einem der vorherigen Ansprüche, **dadurch gekennzeichnet,**
**dass** die Leitungen entweder flexible Schläuche (14,15,16) für das Heizmedium Wasser oder elektrische Leitungen für das Heizmedium elektrische Energie jeweils mit kreisrundem Querschnitt sind.

6. Fußboden- und/oder Wand- und/oder Deckenheizung nach einem der vorherigen Ansprüche, **dadurch gekennzeichnet,**
**dass** das Füllmaterial für die Restfugen (17,24) des Quaders (1) ein Mörtel oder Kleber oder keramischer Spachtelkleber ist, welcher gegebenenfalls mit Ton und/oder Glasschleifschlamm vermischt ist.

7. Fußboden- und/oder Wand- und/oder Deckenheizung nach einem der Ansprüche 1 bis 6, **dadurch gekennzeichnet, dass** der Abstand der Leitung (14, 15, 16) zur Hauptoberfläche (21) und/oder die Dicke der Restfugen (17, 24) zwischen der Leitung (14, 15, 16) und der Wandung der Längsnuten (2, 3, 4) weniger als 20 mm, vorzugsweise weniger als 15 mm, weniger als 10 mm oder insbesondere weniger als 5 mm beträgt.

8. Heizungselement zum Aufbau einer Fußboden- und/oder Wand- und/oder Deckenheizung, bestehend aus einem plattenförmigen Quader (1,29), der parallel zueinander verlaufende Aussparungen (2,3,4) aufweist, die in sich gegenüberliegende Stirnflächen (25,26) des Quaders (1) münden und die Enden der Aussparungen (2,3,4) zweier benachbarter Quader (1), die mit ihren Stirnflächen (25,26) aneinanderstoßen, sich decken, wobei in die Aussparungen (2,3,4) wenigstens eine ein Heizmedium führende Leitung (14,15,16) verlegbar ist, wobei
die Aussparungen von einer der Hauptoberflächen (21,22) des Quaders (1) ausgehende, zu dieser Hauptoberfläche (21,22) hin offene Längsnuten (2,3,4) sind, deren Tiefe (s) geringfügig größer bis höchstens gleich dem Durchmesser (d) der in den Längsnuten (2,3,4) zu verlegenden Leitung (14,15,16) ist, **dadurch gekennzeichnet**
- **dass** der plattenförmige Quader (1) aus Keramik, Steinzeug, Steingut oder Ton besteht,
- **dass** die Leitungen (14,15,16) flexible kunststoffleitungen sind sowie in den Längsnuten (2,3,4) längs formschlüssig-luftdicht der Hauptoberfläche (21,22) benachbart anzugeordnen sind, wobei die zwischen der Oberseite der Leitungen (14,15,16) innerhalb der Längsnuten (2,3,4) und der Hauptoberfläche (21,22) des Quaders (1) gebildete Restfuge (17,24) mittels eines Füllmaterials (18) luftdicht verfugbar ist und
- **dass** innerhalb der Längsnuten (2,3,4) die lichte Weite (w) derselben längs der Einmündung in die Hauptoberfläche kleiner ist als der Durchmesser (d) der leitung (14,15,16).

9. Heizungselement nach Anspruch 8, **dadurch gekennzeichnet, dass** der Quader (1) auch in seiner den Längsnuten (2,3,4) gegenüberliegenden Hauptoberfläche (21,22) wenigstens eine flächige Aussparung (7,8,45,46), vorzugsweise in Form eines Längskanals, aufweist, die wenigstens von zwei längs verlaufenden Randstegen begrenzt ist und in der ein wärmeisolierender Isolierkörper (12,13) angeordnet ist.

10. Heizungselement nach Anspruch 9, **dadurch gekennzeichnet, dass** der Quader (1) zur Verwendung als Bodenelement zwei oder mehr Aussparungen (7,8,45,46), vorzugsweise in Form von Längskanälen, aufweist, die durch wenigstens einen Mittelsteg (11) unterteilt und an den Seitenkanten von je einem längs verlaufenden Randsteg (9,10) begrenzt sind, wobei in der Projektion der oberen, die Längsnuten (2,3,4) aufweisenden Hauptoberfläche (21) auf die untere, die Aussparungen (7,8) aufweisende Hauptoberfläche (22) jeweils oberhalb eines Mittelsteges (11) eine Längsnut (2,3,4) verläuft.

11. Heizungselement nach Anspruch 9 oder 10, **dadurch gekennzeichnet, dass** die luftführenden Aussparungen (45,46), vorzugsweise in Form von Längskanälen (45,46) des Heizungselements (41) von luftführenden Querkanälen (48,49,50) durchsetzt sind, welche quer verlaufend in den Randstegen (9,10) und dem/den Mittelsteg/en (11) angeordnet sind.

12. Heizungselement nach einem der vorherigen Ansprüche 8 bis 11, **dadurch gekennzeichnet, dass** die Aussparungen (7,8,45,46) einen schwalbenschwanzförmigen oder trapezformigen Querschnitt aufweisen.

13. Heizungselement nach einem der vorherigen Ansprüche 8 bis 12, **dadurch gekennzeichnet, dass** dasselbe auf seinen zwei seitlichen, sich gegenüberliegenden Längsflächen (39,40) je eine Längsnut (5) und eine Feder (6) 5 zur Nut-und-Federverlegung zweier benachbarter Heizungselemente (1) aufweist.

14. Heizungselement nach einem der vorherigen Ansprüche 8 bis 13, **dadurch gekennzeichnet, dass** bei der Verwendung desselben als Wand-element dieses nur eine einzige, von je einem längs verlaufenden Randsteg begrenzte Ausspärung aufweist, und auf der gegenüberliegenden Hauptoberfläche zwischen vier bis sechs Längsnuten angeordnet sind.

15. Heizungselement nach einem der vorherigen Ansprüche 8 bis 14 zur Verwendung als Wandelement, **dadurch gekennzeichnet, dass** dasselbe als rechtwinkliges oder schiefwinkliges Eckelement (33) mit zwei Längsschenkeln (34,35) ausgebildet ist.

16. Heizungselement nach einem der vorherigen Ansprüche 8 bis 15, zur Verwendung als Wandelement (37), **dadurch gekennzeichnet, dass** dasselbe gekrümmt ausgestaltet ist.

17. Heizungselement nach einem der vorherigen Ansprüche 8 bis 16, **dadurch gekennzeichnet, dass** dasselbe ungefähr eine Länge zwischen 50 bis 100 cm, eine Breite von 25 - 50 cm und eine Dicke von 5 bis 7 cm aufweist, wobei die Tiefe der Nuten zwischen 12 bis 22 mm beträgt.

18. Heizungselement nach einem der Ansprüche 8 bis 17, **dadurch gekennzeichnet, dass** der Abstand der Leitung (14, 15, 16) zur Hauptoberfläche (21) und/oder die Dicke der Restfugen (17, 24) zwischen der Leitung (14, 15, 16) und der Wandung der Längsnuten (2, 3, 4) weniger als 20 mm, vorzugsweise weniger als 15 mm, weniger als 10 mm oder insbesondere weniger als 5 mm beträgt.

## Claims

1. Floor and/or panel and/or ceiling heating, comprising individual heating elements in the form of plate-shaped cuboids (1, 29) with parallel recesses (2, 3, 4) which discharge into opposite fronts (25, 26) of the cuboid (1), with the ends of the recesses (2, 3, 4) of two adjacent cuboids (1) that abut by their fronts (25, 26) coinciding, wherein at least one pipe (14, 15, 16), which contains a heating medium or coolant, is installed in the recesses (2, 3, 4), leading along a plurality of these heating elements, wherein the recesses are longitudinal grooves (2, 3, 4), which start from one of the main surfaces (21, 22) of the cuboid (1) and are open towards this main surface (21, 22), and the depth (s) of which is slightly greater than, to maximally equal to, the diameter (d) of the pipe (14, 15, 16), **characterized**
- **in that** the plate-shaped cuboids (1) consist of ceramics, stoneware, earthenware or clay;
- **in that** the pipes (14, 15, 16) are flexible plastic pipes which are longitudinally hermetically disposed with positive fit in the longitudinal grooves (2, 3, 4) and thus in vicinity to the main surface (21, 22), with the gap (17, 24) that remains between the top side of the pipes (14, 15, 16) within the longitudinal grooves (2, 3, 4) and the main surface (21, 22) of the cuboid (1) being hermetically pointed by a filler (18); and
- **in that** the clearance (w) inside the longitudinal grooves (2, 3, 4) where they discharge into the main surface is less than the diameter (d) of the pipe (14, 15, 16).

2. Floor and/or panel and/or ceiling heating according to claim 1, **characterized in that** the cuboid (1), in the main surface (21, 22) opposite the longitudinal grooves (2, 3, 4), comprises recesses (7, 8), preferably in the form of longitudinal channels, where heat insulating insulators (12, 13) are disposed; or **in that** the recesses and longitudinal channels, respectively, serve for conducting hot or cold air or for air insulation.

3. Floor and/or panel and/or ceiling heating according to claim 2, **characterized in that** the air-conducting recesses (45, 46), preferably in the form of longitudinal channels (45, 46), are interspersed by cross channels (48, 49, 50).

4. Floor and/or panel and/or ceiling heating according to one of claims 1 or 2 or 3, **characterized in that** flags (20) or tiles or wood or any other floor covering is applied to the main surface (21) of the cuboid (1) that is provided with the longitudinal grooves (2, 3, 4) and pipes (14, 15, 16).

5. Floor and/or panel and/or ceiling heating according to one of the preceding claims, **characterized in that** the pipes are flexible tubes (14, 15, 16) for the heating medium water or electric lines for the heating medium electric energy, each of circular cross-sectional shape.

6. Floor and/or panel and/or ceiling heating according to one of the preceding claims, **characterized in that** the filler for the remaining joints (17, 24) of the cuboid (1) is mortar or adhesive or ceramic filler adhesive, possibly mixed with clay and/or glass grinding swarf.

7. Floor and/or panel and/or ceiling heating according to one of claims 1 to 6, **characterized in that** the distance of the pipe (14, 15, 16) from the main surface (21) and/or the thickness of the remaining gaps (17, 24) between the pipe (14, 15, 16) and the wall of the longitudinal grooves (2, 3, 4) is less than 20 mm, preferably less than 15 mm, less than 10 mm or in particular less than 5 mm.

8. Heating element for construction of a floor and/or panel and/or ceiling heating, comprising a plate-shaped cuboid (1, 29) with parallel recesses (2, 3, 4) which discharge into opposite fronts (25, 26) of the cuboid (1), with the ends of the recesses (2, 3, 4) of two adjacent cuboids (1) that abut by their fronts (25, 26) coinciding, wherein at least one pipe (14, 15, 16) that contains a heating medium is installable in the recesses (14, 15, 16), wherein the recesses are longitudinal grooves (2, 3, 4) which start from one of the main surfaces (21, 22) of the cuboid (1) and are open towards this main surface (21, 22), and the depth (s) of which is slightly greater than, to maximally equal to, the diameter (d) of the pipe (14, 15, 16) that is to be installed in the longitudinal grooves (2, 3, 4), **characterized**
- **in that** the plate-shaped cuboid (1) consists of ceramics, stoneware, earthenware or clay;
- **in that** the pipes (14, 15, 16) are flexible plastic pipes which are longitudinally hermetically disposed with positive fit in the longitudinal grooves (2, 3, 4) in vicinity to the main surface (21, 22), it being possible, by a filler (18), to hermetically point the gap (17, 24) that remains between the top side of the pipes (14, 15, 16) within the longitudinal grooves (2, 3, 4) and the main surface (21, 22) of the cuboid (1); and
- **in that** the clearance (w) inside the longitudinal grooves (2, 3, 4) where they discharge into the main surface is less than the diameter (d) of the pipe (14, 15, 16).

9. Heating element according to claim 8, **characterized in that** the cuboid (1), in the main surface (21, 22) opposite the longitudinal grooves (2, 3, 4), comprises at least one planar recess (7, 8, 45, 46), preferably in the form of a longitudinal channel, which is defined by at least two longitudinal marginal ribs and in which a heat insulating insulator (12, 13) is disposed.

10. Heating element according to claim 9, **characterized in that** the cuboid (1), for use as a floor element, comprises two recesses (7, 8, 45, 46) or more, preferably in the form of longitudinal channels, which are divided by at least one central rib (11) and laterally defined by a respective longitudinal marginal rib (9, 10), wherein, in a projection of the top main surface (21) that has the longitudinal grooves (2, 3, 4) on the bottom main surface (22) that has the recesses (7, 8), a longitudinal groove (2, 3, 4) extends above each central rib (11).

11. Heating element according to claim 9 or 10, **characterized in that** the air-conduction recesses (45, 46), preferably in the form of longitudinal channels (45, 46) of the heating element (41), are interspersed by air-conduction cross channels (48, 49, 50) which are disposed crosswise in the marginal ribs (9, 10) and the central rib/s (11).

12. Heating element according to one of the preceding claims 1 to 11, **characterized in that** the recesses (7, 8, 45, 46) have a cross-sectional shape of a dove tail or trapezoid.

13. Heating element according to one of the preceding claims 8 to 12, **characterized in that**, on the two lateral opposite longitudinal surfaces (39, 40), the heating element respectively comprises a longitudinal slot (5) and a key (6) for key and slot installation of two adjacent heating elements (1).

14. Heating element according to one of the preceding claims 8 to 13, **characterized in that**, when used as a panel element, the heating element has only a single recess defined by in each case one longitudinal marginal rib; and **in that** four to six longitudinal grooves are disposed on the opposite main surface.

15. Heating element according to one of the preceding claims 8 to 14 for use as a panel element, **characterized in that** the heating element is a rectangular or oblique-angled comer element (33) with two longitudinal legs (34, 35).

16. Heating element according to one of the preceding claims 8 to 15, for use as a panel element (37), **characterized in that** it is curved.

17. Heating element according to one of the preceding claims 8 to 16, **characterized in that** it has a length ranging between 50 to 100 cm, a width from 25 to 50 cm and a thickness of 5 to 7 cm, with the depth of the grooves ranging between 12 to 22 mm.

18. Heating element according to one of claims 8 to 17, **characterized in that** the distance of the pipe (14, 15, 16) from the main surface (21) and/or the thickness of the remaining joints (17, 24) between the pipe (14, 15, 16) and the wall of the longitudinal grooves (2, 3, 4) is less than 20 mm, preferably less than 15 mm, less than 10 mm or in particular less than 5 mm.

## Revendications

1. Dispositif de chauffage de sol et/ou de mur et/ou de plafond, constitué par des éléments de chauffage individuels se présentant sous la forme de blocs parallélépipédiques en forme de plaques (1, 29), qui possèdent des évidements (2, 3, 4) s'étendant parallèlement entre eux, qui débouchent dans des surfaces frontales opposées (25, 26) du bloc parallélépipédique (1), et dans lequel les extrémités des évidements (2, 3, 4) de deux blocs parallélépipédiques voisins (1), qui sont en aboutement par leurs surfaces frontales (25, 26), se recouvrent, et dans lequel au moins une canalisation (14, 15, 16) qui guide un fluide de chauffage ou de refroidissement est disposée dans les évidements (2, 3, 4) et est guidé sur une multiplicité de tels éléments de chauffage, et dans lequel les évidements sont les rainures longitudinales (2, 3, 4) s'étendant à partir de l'une des surfaces principales (21, 22) du bloc parallélépipédique (1) et ouvertes en direction de cette surface principale (21, 22) et dont la profondeur (s) est légèrement supérieure ou au maximum égale au diamètre (d) de la canalisation (14, 15, 16), **caractérisé en ce**
- **que** les blocs parallélépipédiques en forme de plaques (1) sont formés d'une céramique, de grès-cérame, de pierre ou d'argile,
- **que** les canalisations (14, 15, 16) sont des canalisations en matière plastique flexibles et sont disposées dans les rainures longitudinales (2, 3, 4) d'une manière étanche à l'air et selon une liaison par formes complémentaires longitudinalement et sont par conséquent voisines de la surface principale (21, 22), le joint résiduel (17, 24), formé entre la face supérieure des canalisations (14, 15, 16) à l'intérieur des rainures longitudinales (2, 3, 4) et de la surface principale (21, 22) du bloc parallélépipédique (1), étant rempli d'une manière étanche à l'air (18) par un matériau de remplissage, et
- **qu'**à l'intérieur des rainures longitudinales (2, 3, 4), la largeur (W) de ces dernières le long de l'embouchure dans la surface principale est inférieure au diamètre (d) de la canalisation (14,15,16).

2. Dispositif de chauffage de sol et/ou de mur et/ou de plafond selon la revendication 1, **caractérisé en ce que** le bloc parallélépipédique (1) comporte, également dans sa surface principale (21, 22) située à l'opposé des rainures longitudinales (2, 3, 4), des évidements (7, 6) de préférence sous la forme de canaux longitudinaux, dans lesquels sont disposés des corps thermo-isolants (12, 13), ou **en ce que** les évidements ou les canaux longitudinaux servent à guider de l'air chaud ou de l'air froid ou à réaliser une isolation d'air.

3. Dispositif de chauffage de sol et/ou de mur et/ou de plafond selon la revendication 2, **caractérisé en ce que** les évidements (45, 46), qui guident l'air, de préférence sous la forme de canaux longitudinaux (45, 46), sont traversés par des canaux transversaux (48, 49, 50) guidant l'air.

4. Dispositif de chauffage de sol et/ou de mur et/ou de plafond selon l'une des revendications 1 ou 2 ou 3, **caractérisé en ce que** des plaques (20) ou des carreaux ou du bois ou un autre revêtement de sol sont disposés sur la surface principale (21) du bloc parallélépipédique (1), qui comporte les rainures longitudinales (2, 3, 4) et les canalisations (14, 15, 16).

5. Dispositif de chauffage de sol et/ou de mur et/ou de plafond selon l'une des revendications précédentes, **caractérisé en ce que** les canalisations sont des tuyaux flexibles (14, 15, 16) ou des lignes électriques pour le fluide de chauffage ou l'énergie électrique, possédant respectivement une section transversale circulaire.

6. Dispositif de chauffage de sol et/ou de mur et/ou de plafond selon l'une des revendications précédentes, **caractérisé en ce que** le matériau de remplissage pour les joints résiduels (17, 24) du bloc parallélépipédique (1) est un mortier ou une colle ou une colle céramique à enduire, qui est mélangée éventuellement avec de l'argile et/ou de la boue de polissage de verre.

7. Dispositif de chauffage de sol et/ou de mur et/ou de plafond selon l'une des revendications 1 à 6, **caractérisé en ce que** la distance entre la canalisation (14, 15, 16) et la surface principale (21) et/ou l'épaisseur des joints résiduels (17, 24) entre la canalisation (14, 15, 16) et la paroi des rainures longitudinales (2, 3, 4) est inférieure à 20 mm, de préférence inférieure à 15 mm, inférieure à 10 mm et notamment inférieure à 5 mm.

8. Elément chauffant pour le montage d'un dispositif de chauffage de sol et/ou de mur et/ou de plafond, constitué par un bloc parallélépipédique en forme de plaque (1, 29), qui possède des évidements (2, 3, 4) s'étendant parallèlement entre eux, qui débouchent dans des surfaces frontales (25, 26) du bloc parallélépipédique (1), qui sont opposées entre elles, et dans lequel les extrémités des évidements (2, 3, 4) de deux blocs parallélépipédiques voisins (1), qui sont en aboutement par leurs faces frontales (25, 26), se recouvrent, et dans lequel au moins une canalisation (14, 15, 16) guidant un fluide de chauffage peut être disposée dans les évidements (2, 3, 4), et dans lequel les évidements sont les rainures longitudinales (2, 3, 4) s'étendant à partir de l'une des surfaces principales (21, 22) du bloc parallélépipédique (1) et ouvertes en direction de cette surface principale (21, 22) et dont la profondeur (s) est légèrement supérieure ou au maximum égale au diamètre (d) de la canalisation (14, 15, 16), **caractérisé en ce**
- **que** les blocs parallélépipédiques en forme de plaques (1) sont formés d'une céramique, de grès-cérame, de pierre ou d'argile,
- **que** les canalisations (14, 15, 16) sont des canalisations en matière plastique flexibles et doivent être disposées dans les rainures longitudinales (2, 3, 4) d'une manière étanche à l'air et selon une liaison par formes complémentaires dans la direction longitudinale au voisinage de la surface principale (21, 22), et le joint résiduel (17, 24), formés entre la face supérieure des canalisations (14, 15, 16) à l'intérieur des rainures longitudinales (2, 3, 4) et la surface principale (21, 22) du bloc parallélépipédique (1), peut être rempli d'une manière étanche à l'air (18) par un matériau de remplissage, et
- **qu'**à l'intérieur des rainures longitudinales (2, 3, 4), la largeur (W) de ces dernières le long de l'embouchure dans la surface principale est inférieure au diamètre (d) de la canalisation (14,15,16).

9. Elément chauffant selon la revendication 8, **caractérisé en ce que** le bloc parallélépipédique (1) comporte également dans sa surface principale (21, 22) située à l'opposé des rainures longitudinales (2, 3, 4), au moins un évidement plat (7, 8, 45, 46) de préférence sous la forme d'un canal longitudinal, qui est limité au moins par deux barrettes marginales longitudinales et dans lequel est disposé un corps thermo-isolant (12, 13).

10. Elément chauffant selon la revendication 9, **caractérisé en ce que** le corps parallélépipédique (1) comporte, pour son utilisation en tant qu'élément de sol, deux ou plusieurs évidements (7, 8, 45, 46) de préférence sous la forme de canaux longitudinaux, qui sont séparés par au moins une barrette médiane (11) et sont limités, au niveau des bords latéraux, par une barrette marginale longitudinale respective (9, 10), auquel cas dans la projection de la surface principale supérieure (21) possédant les rainures longitudinales (2, 3, 4) sur la surface principale inférieure (22) possédant les évidements (7, 8), une rainure longitudinale (2, 3, 4) s'étend respectivement au-dessus d'une barrette médiane (11).

11. Elément chauffant selon la revendication 9 ou 10, **caractérisé en ce que** les évidements (45, 46) de guidage de l'air, qui sont de préférence sous la forme de canaux longitudinaux (45, 46) de l'élément chauffant (41), sont traversés par des canaux transversaux (48, 49, 50), qui guident l'air et qui sont disposés de manière à s'étendre transversalement dans les barrettes marginales (9, 10) et dans la ou les barrettes médianes (11).

12. Elément chauffant selon l'une des revendications précédentes (8 à 11), **caractérisé en ce que** les évidements (7, 8, 45, 46) possèdent une section transversale en forme de queue d'aronde ou en forme de trapèze.

13. Elément chauffant selon l'une des revendications précédentes 8 à 12, **caractérisé en ce que** cet élément chauffant comporte sur ses deux surfaces latérales longitudinales (38, 40) situées en vis-à-vis, respectivement une rainure longitudinale (5) et un ressort (6) pour le montage à tenon et mortaise de deux éléments chauffants voisins (1).

14. Elément chauffant selon l'une des revendications précédentes 8 à 13, **caractérisé en ce que**, dans le cas de l'utilisation de cet élément en tant qu'élément de mur, ce dernier possède un seul évidement, qui est limité par une barrette marginale longitudinale respective et qu'entre quatre à six barrettes longitudinales sont disposées sur la surface principale opposée.

15. Elément chauffant selon l'une des revendications précédentes 8 à 14, pour son utilisation en tant qu'élément de mur, **caractérisé en ce que** cet élément est agencé sous la forme d'un élément d'angle (33) qui est à angle droit ou à angle oblique et possède deux branches longitudinales (34, 35).

16. Elément chauffant selon l'une des revendications précédentes 8 à 15, pour son utilisation en tant qu'élément de paroi (37), **caractérisé en ce que** cet élément est agencé avec une forme cintrée.

17. Elément chauffant selon l'une des revendications précédentes 8 à 16, **caractérisé en ce que** cet élément possède approximativement une longueur comprise entre 50 et 100 cm, une largeur comprise entre 25 et 50 cm et une épaisseur comprise entre 5 et 7 cm, l'épaisseur des rainures étant comprise entre 12 et 22 mm.

18. Elément chauffant selon l'une des revendications précédentes 8 à 17, **caractérisé en ce que** la distance entre la canalisation (14, 15, 16) et la surface principale (21) et/ou l'épaisseur des joints résiduels (17, 24) entre la canalisation (14, 15, 16) et la paroi des rainures longitudinales (2, 3, 4) est inférieure à 20 mm, de préférence inférieure à 15 mm, inférieure à 10 mm ou notamment inférieure à 5 mm.
